# EUROPEAN PATENT APPLICATION

(11) **EP 2 119 923 A1**
(43) Date of publication of application: **18.11.2009**
(21) Application number: 08710908.8
(22) Date of filing: 07.02.2008
(51) Int. Cl.: F16C 27/06, F16F 1/02, F16F 15/06

(54) **ROLLING BEARING DEVICE AND ELECTRIC POWER GENERATION DEVICE**

(30) Priority: 09.02.2007 JP 2007030111
(71) Applicant: JTEKT Corporation, Osaka-shi Osaka 542-8502 (JP)
(72) Inventor: UENO, Hiroshi, Osaka-shi Osaka 542-8502 (JP); SHIRAKI, Toshihiko, Osaka-shi Osaka 542-8502 (JP); OSHIMA, Akio, Osaka-shi Osaka 542-8502 (JP); NAKASHITA, Tomonori, Osaka-shi Osaka 542-8502 (JP); OHTSUKI, Masaaki, Osaka-shi Osaka 542-8502 (JP); BANDO, Shigenori, Osaka-shi Osaka 542-8502 (JP); ABE, Masaki, Osaka-shi Osaka 542-8502 (JP); NAKATA, Ryuji, Osaka-shi Osaka 542-8502 (JP); KIDA, Takehisa, Osaka-shi Osaka 542-8502 (JP)
(74) Representative: Sajda, Wolf E.
(86) International application number: PCT/JP2008/052018
(87) International publication number: WO 2008/096812

(57) **Abstract**

The invention is for the purpose, in a rolling bearing device, of improving its durability by appropriately attenuating vibration of a rotating shaft by means of a high level of dumping performance, and thereby to reduce the load imposed on the rolling bearing and/or the overall system. A rolling bearing device of the present invention comprises a rolling bearing (13) including: an inner ring (24) and an outer ring (23) that are disposed so as to be relatively rotatable; and a plurality of rolling elements (25) disposed between the inner ring (24) and the outer ring (23), in which the rolling bearing (13) supports relative rotation between a shaft (14) and a housing (12). Besides, the rolling bearing device comprises, between the rolling bearing (13) and the housing (12), a damper member (60) formed by one or more metal wires (64) that are knitted.

## Description

### Technical Field

The present invention relates to a rolling bearing device and an electric generator.

### Background Art

In an automobile, an alternator (electric generator) is equipped with a housing to which a stator is fixed, and a rotating shaft to which a rotor is fixed. The rotating shaft is supported by the housing through a rolling bearing. Because the power of an engine is transmitted to the rotating shaft through a drive belt, a high level of vibration caused by high-speed revolutions acts on the rotating shaft through the drive belt, thus inflicting a heavy load upon the rolling bearing device and its overall system. In particular, in a rolling bearing, there is a problem that white layer flaking occurs at the outer ring as a ring roller and thus causes a shorter service life.

For example, in Japanese Patent Application Publication JP-A-2005-308 032, there is disclosed a technique regarding a bearing in possession of a vibration damping function. The technique uses a vibration damping member intervening between an outer ring and a bearing housing of a rolling bearing in order to attenuate the vibration from a rotating shaft by the vibration damping member.
However, because the vibration damping member is formed of elastic material such as synthetic resin material and rubber, it is insufficient for repressing the vibration of an apparatus like an alternator used under severe conditions such as high temperature, high-speed revolutions and heavy load, so it is not a sort of a bearing that is durable for a long-term application.
In particular, it is difficult for an elastic material such as synthetic resin materials and rubber to sustain a vibration depression effect under high temperature environments. Therefore, it is substantially difficult to adopt the technique as described in Japanese Patent Application Publication JP-A-2005-308 032 for the reduction of vibration of a device such as alternator.

The present invention was contrived in view of the aforementioned circumstances, and is aimed to provide a rolling bearing device and an electric generator that are adapted to improve their durability by appropriately attenuating vibrations of a shaft by means of an excellent dumping performance and thereby reducing the load imposed on the overall system including the rolling bearing device and its housing.

### Disclosure of Invention

A rolling bearing device of the present invention comprises a rolling bearing including: an inner ring and an outer ring disposed so as to be rotatable relatively; and a plurality of rolling elements disposed between the inner ring and the outer ring; the rolling bearing device supports, through the rolling bearing, a shaft rotatable relative to a housing, wherein the rolling bearing device comprises a damper member disposed between the rolling bearing and the housing; and the damper member is formed of metal wire(s) that is(are) knitted.

Besides, an electric generator of the present invention comprises: a stator and a rotor; a housing to which the stator is fixed; a rotating shaft to which the rotor is fixed and an rotational power is transmitted from external; and a rolling bearing that is fixed to the housing and supports the rotating shaft in such a manner that the shaft can rotate unrestrictedly, wherein the electric generator comprises a damper member disposed between the rolling bearing and the housing; and the damper member is formed of metal wire(s) that is(are) knitted.

According to the above-mentioned inventions, since the damper member disposed between the rolling bearing and the housing is formed of metal wire(s) that is(are) knitted, it is capable of performing elastic deformation (contraction) over its entire dimensions, attenuating three-dimensionally omnidirectional vibrations, thereby providing a high level of dumping performance. Thus, it is possible to reduce the load on the rolling bearing and the overall system, and thus to improve their durability.
As for the rolling bearing, this helps in particular to repress white layer peeling. Additionally, because the damper member is formed of one or more metal wires, it has high strength and high heat resistance; therefore, even a device with heavy-duty working conditions like an electric generator such as an alternator and the like is capable of serving for a long-term application.

Gaps are formed between the wire(s), and it is preferable that the gaps are filled with a lubricant. Thereby it is possible to prevent the wires from being worn out by rubbing each other in the course of its elastic deformation.

Gaps are formed between the wire(s), and it is preferable that the porosity as defined by the ratio of overall volume of the gaps to overall volume of the damper member is set within a range exceeding 50 % and under 70 %. This can result not only in reducing omnidirectional vibrations in a well balanced manner, but also in securing rigidity required to support the rolling bearing.

### Brief Description of Drawings

- Fig. 1: is a sectional view of an electric generator to which a rolling bearing device according to an embodiment of the present invention is applied.
- Fig. 2: is a perspective view of a damper member.
- Fig. 3: is an enlarged view of the portion III in Fig. 2.
- Fig. 4: shows a performance test result of an electric generator comprising a damper member of 60 % porosity, in which a graph in Fig. 4(a) depicts a relationship between time and number of revolutions of a rotating shaft, and a graph in Fig. 4(b) depicts a relationship between time and vibration value, respectively.
- Fig. 5: shows a performance test result of an electric generator comprising a damper member of 50 % porosity, in which a graph depicts a relationship between time and vibration value.
- Fig. 6: shows a performance test result of an electric generator according to a comparative example, in which a graph in Fig. 6(a) depicts a relationship between time and number of revolutions of a rotating shaft, and graph in Fig. 6(b) depicts a relationship between time and vibration value, respectively.

### Description of Embodiments

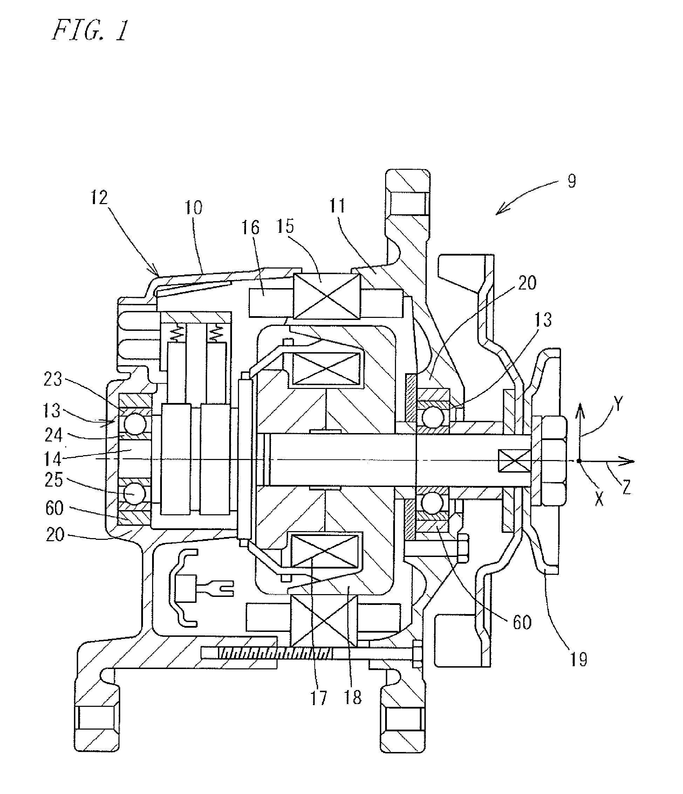

Fig. 1 is a sectional view of an alternator (electric generator) 9 employing a rolling bearing device according to an embodiment of the present invention. The alternator 9 comprises a housing 12 and a rotating shaft 14. The housing 12 comprises a front housing 10 and a rear housing 11 conjoined by bolts. The rotating shaft 14 is rotatably supported by means of two rolling bearings 13, 13 inside the housing 12.
In the housing 12 is disposed a stator 16 comprising a wound coil 15. To the rotating shaft 14 is provided a rotor 18 comprising a wound coil 17. To an end of the rotating shaft 14 protruding from the housing 12 is attached a pulley 19 with a built-in fan. To the pulley 19 is transmitted a motive power from an engine through a drive belt which is not illustrated.

The rolling bearing 13 is mounted inside a support tube member 20 formed in the housing 12 at each end of the axial direction. To be more concrete, the rolling bearing 13 comprises an outer ring 23; an inner ring 24 disposed diametrically inside the outer ring 23; and a number of balls (rolling elements) 25 disposed between the outer ring 23 and the inner ring 24, and it is made such that the outer ring 23 and the inner ring 24 are relatively rotatable.
On the inner circumferential surface of the inner ring 24 of the rolling bearing 13 is fitted the rotating shaft 14, and between the outer circumferential surface of the outer ring 23 and the inner circumferential surface of the support tube member 20 of the rolling bearing 13, there is disposed a damper member 60 to attenuate vibrations occurring with revolution of the rotating shaft 14. Then, the rolling bearing device of the present invention is composed of the rolling bearing 13 and the damper member 60.

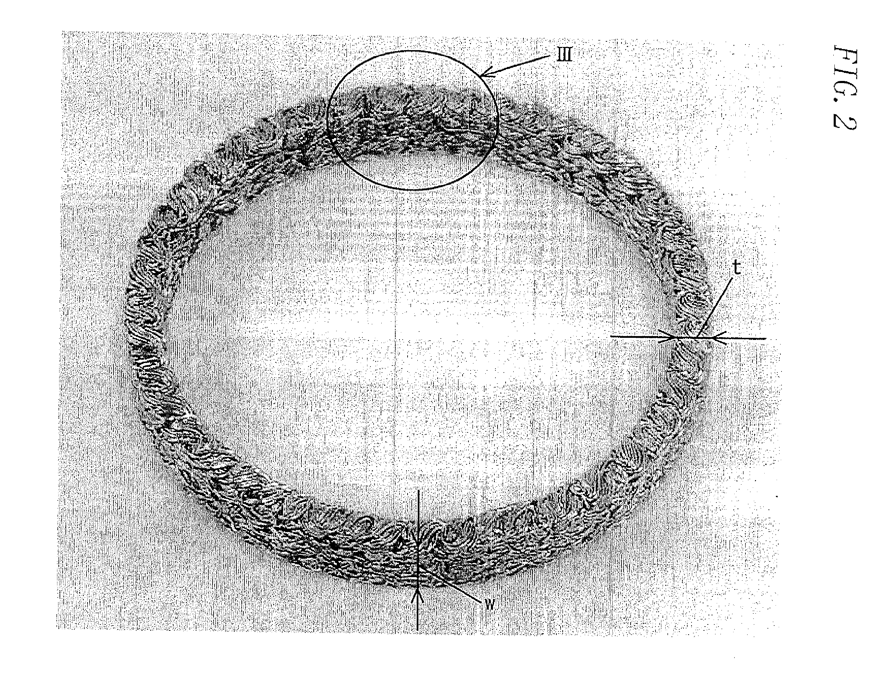

Fig. 2 is a perspective view of the damper member 60, and the damper member 60 is formed in a ring-shape of a generally rectangular cross section having a width w and a thickness t. The inner circumferential surface of the damper member 60 is engaged with the outer circumferential surface of the outer ring 23 of the rolling bearing 13, and the outer circumferential surface of the damper member 60 abuts against the inner circumferential surface of the support tube member 20.

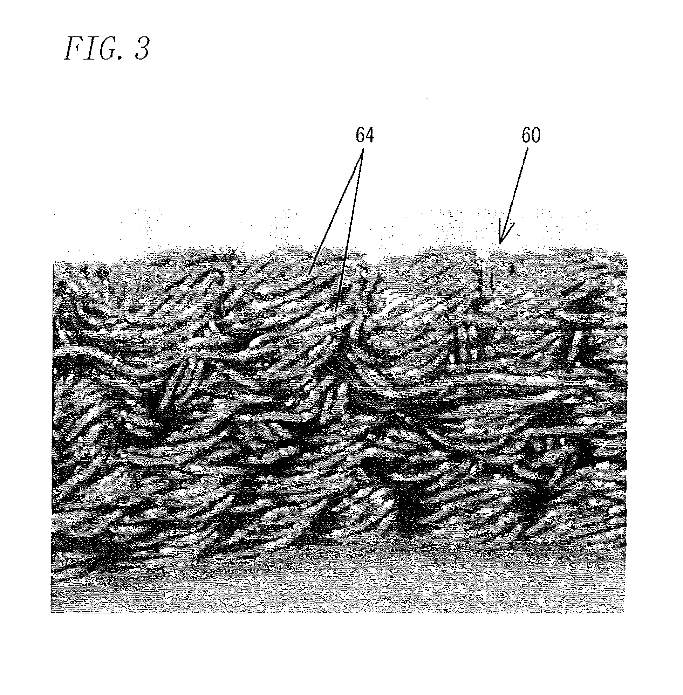

Fig. 3 is an enlarged view of the portion III of Fig. 2. The damper member 60 is formed of metal wire(s) 64 such as stainless steel as its material. Concretely, one or more metal wires 64 are three-dimensionally knitted while intricately flexed (i.e., one or more wires 64 are gathered, twisted, interlaced and/or intertwined with each other), thereby forming the damper member 60 in a ring-shape as a whole with a generally rectangular cross section.

Between metal wires 64 composing the damper member 60 are formed gaps (voids) generally or partially. The damper member 60 is capable of performing elastic deformation (contraction) generally in a diametrical direction (X-direction (page penetration direction), Y-direction, etc. in Fig. 1), and shaft center Z-direction, by means of the wire 64 performing elastic deformation within the range of the gaps, the wires next to each other displacing longitudinally, and so on.
Then, the damper member 60 is formed with an external diameter slightly greater than the inside diameter of the support tube member 20, and disposed, as shown in Fig. 1, between the rolling bearing 13 and the support tube member 20 in a diametrically compressed state by a predetermined interference.

As shown in Fig. 3, gaps between wires 64 in the damper member 60 are filled with a lubricant. For a lubricant, lubricating oil or grease can be used. For lubricating oil, for example, either of those from ester, ether, silicon, fluorine and synthetic hydrocarbon type is used.
For grease, for example, either of those in which a thickener of lithium-type or urea-type is added to a base oil of those from ester oil, ether oil, silicone oil, fluorine oil or synthetic hydrocarbon oil is used. For a metal wire 64, for example, one of those having 0.4 mm external diameter is used. The ratio (porosity) of the total volume occupied by the gaps to the total volume of the damper member 60 can be made as e.g. 60 %.

The damper member 60 is produced as follows. First, a ring-shaped intermediate article is formed having external diameter, thickness t and width w slightly greater than, and inside diameter smaller than, those of a finally shaped article. The intermediate article is formed by moderately knitting the metal wire 64 in order to have porosity greater than the porosity (e. g., 60 %) of a finally shaped article. Then the gaps between wires 64 are decreased by compressing the intermediate article using a metallic mold, thus forming a finally shaped article with desired dimensions and porosity.

In the above-mentioned constitution, vibrations transmitted through the rotating shaft 14 from the drive belt to the rolling bearing 13 are attenuated by the damper member 60, and then transmitted to the housing 12. In this event, because the damper member 60 is capable of performing elastic deformation in diametrical (X-, Y-) and shaft center (Z-) directions, it is capable of attenuating vibrations three dimensionally and omnidirectionally, thereby providing a high level of damping performance.
Moreover, not only through elastic deformation of the metal wire 64 itself, but also through friction that is brought by the knitted structure of the wire 64 as well as the state in which the wire 64 is intertwined and so forth, vibrational energy of all directions is sustained and can be alleviated by its performance that surpasses simple viscoelasticity.

Therefore, vibrations propagating from the rotating shaft 14 to the housing 12 through the rolling bearing 13 are reduced, so that the durability of the rolling bearing 13, the housing 12 and, in turn, the alternator 9 as a whole, can be improved. Particularly, in the rolling bearing 13, white layer flaking can be suppressed. Besides, noise can be reduced as a result of decrease of vibrations.

Because the damper member 60 is formed using metal wire(s) 64, it can provide robust strength and heat resistance. Accordingly, it does not deteriorate at an early stage even under high vibrations (high load), high temperature working conditions, so that its long-term use is enabled.
Also, since the gaps between the wires 64 in the damper member 60 are filled with grease, there is little chance of the wires 64 rubbing each other to be worn out in the course of elastic deformation.

The elastic modulus (constant of spring) of the damper member 60 can be changed freely by appropriately selecting its porosity, direction of knitting, and external diameter of the wire 64, etc. Further, the elastic modulus can be made different depending on the direction (diametrical direction, axial direction) of elastic deformation. Thus, a damper member 60 according to the required damping characteristics can be produced easily.
Moreover, because the geometry of the damper member 60 (outside diameter, inside diameter, width w, thickness t, cross-sectional geometry) can be designed freely, degree of freedom in designing an alternator 9 increases, which allows one to produce optimal alternators 9.

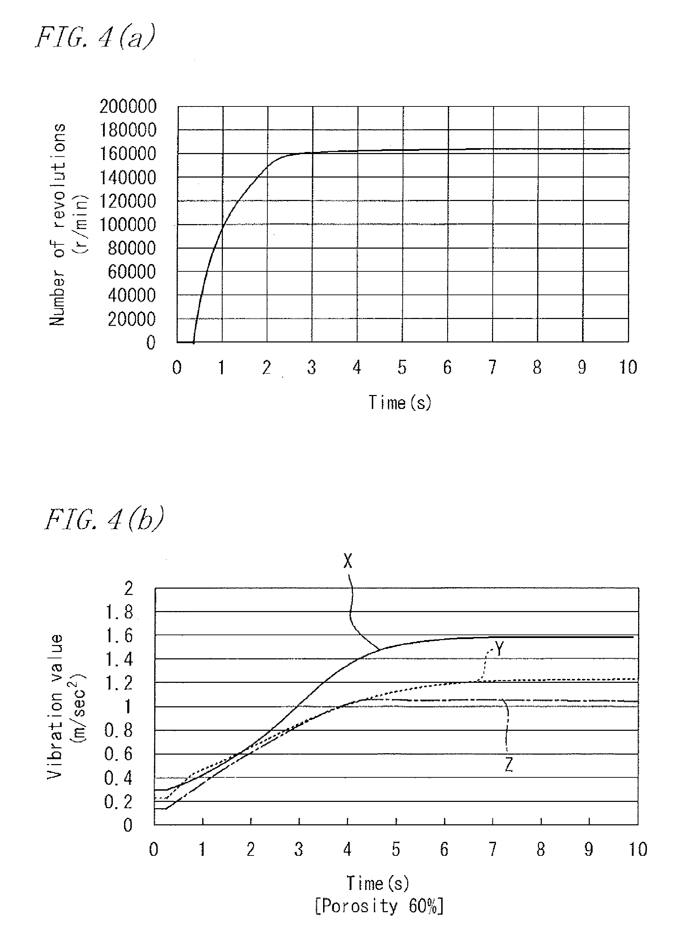

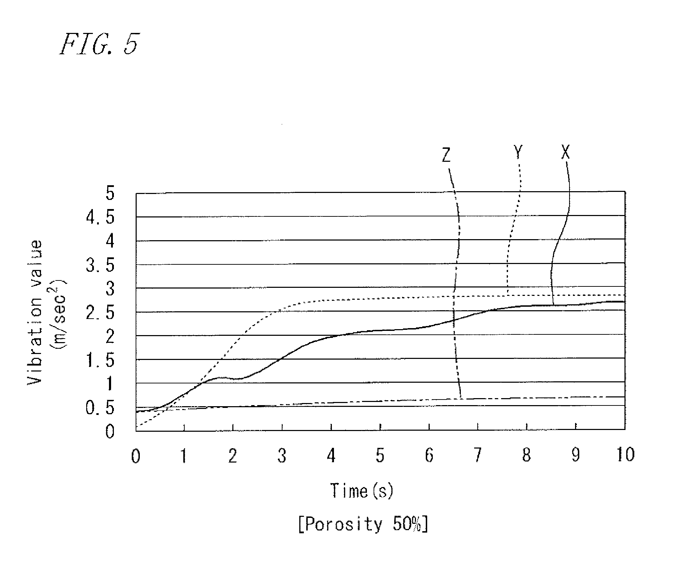

Shown below as a reference is a performance test result of an alternator 9 equipped with the damper member 60.
The test was performed on the alternator 9 equipped with the damper member 60 by measuring the vibration value of the housing 12 occurring with the revolutions while the rotational motive power was transmitted to the rotating shaft 14 through the pulley, Fig. 4 and Fig. 5 are graphs showing the test result. Fig. 4(a) shows a change in number of revolutions with passage of time, whereas Fig. 4(b) and Fig. 5 show changes in the vibration values of the housing in X-direction, Y-direction and Z-direction that resulted from the change in number of revolutions expressed in Fig. 4(a).

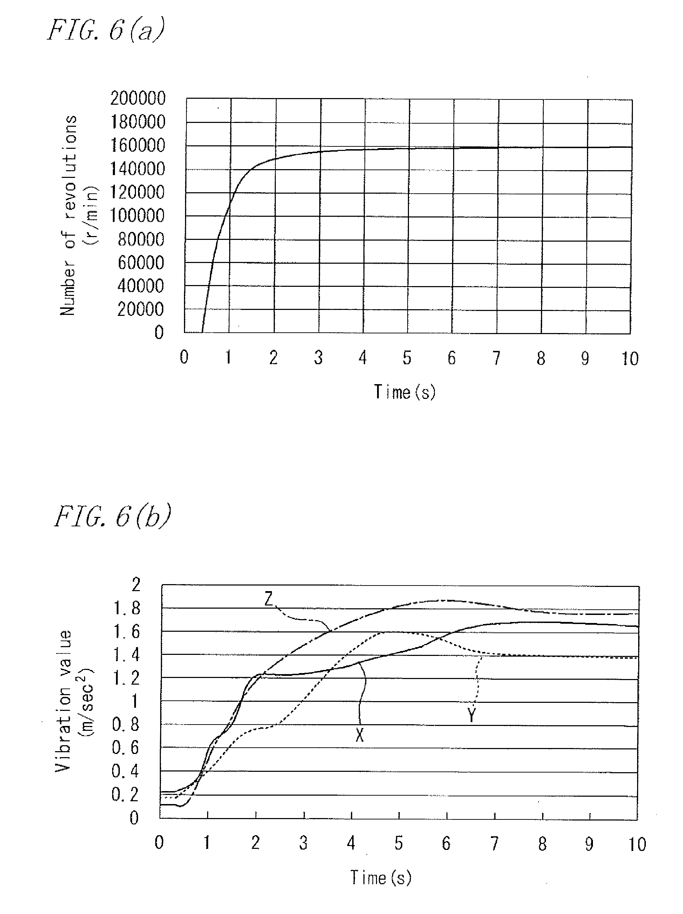

In the test shown in Fig. 4(b), a damper member 60 of 60 % porosity was used, whereas a damper member 60 of 50 % porosity was used in the test shown in Fig. 5. Then, the gaps between wires 64 were filled with fluorine type grease.
Additionally, Fig. 6 shows, as a comparative example, the vibration values measured in a test under the same condition as performed in Fig. 4 and Fig. 5, however on an alternator 9 without a damper member (i.e. in which the rolling bearing 13 was mounted directly to the support tube member 20).

In the comparative example of Fig. 6, when number of revolutions of the rotating shaft 14 was assumed at some 160,000 r/min level, maximum vibration values of X-, Y- and Z-directions fell within the range of about 1.4 to 1.9 m/sec². Besides, the vibration values increased sharply after starting, and irregular fluctuations were also found.
In contrast, when a damper member 60 of 60 % porosity was used, as shown in Fig. 4, the vibration value had a maximum of about 1.6 m/sec² in X-direction; whereas in Y- and Z-directions, the vibration values remained within the range of about 1.0 to 1.3 m/sec², showing substantial reductions. Besides, build-up of the vibration values from starting was moderate, and the vibration values stabilized at an earlier stage than those of the comparative example.
Accordingly, it is understood that vibrations can be reduced effectively by disposing a damper member 60 of the present embodiment.

Further, when a damper member 60 of 50 % porosity was used, although the vibration values in X- and Y-directions slightly rose compared with the comparative example (see Fig. 6(b)) as shown in Fig. 5, the vibration value became not more than 1 m/sec² in Z-direction, showing a considerable reduction. However, taking into consideration a reduction of the vibration values in a well balanced manner omnidirectionally in X-, Y- and Z-directions, it may be said that using a damper member 60 of 60 % porosity is preferred to using a damper member 60 of 50 % porosity.
Moreover, although it is not illustrated, strength of a damper member 60 decreases when porosity becomes not less than 70 %, so that the rigidity to support the rolling bearing 13 becomes lowered; so, in this respect also, it is thought that using a damper member 60 of 60 % porosity is preferred.

Based upon the foregoing, in order to reduce the vibration values in a well balanced manner omnidirectionally in
X-, Y- and Z- directions, and in order to retain the rigidity enough to support the rolling bearing 13, it is preferred to set the porosity of the damper member 60 to fall within the range of over 50 % and under 70 %, and more preferred to fall within 55 % - 65 %.

Because the damper member 60 of the present invention consists of one or more metal wires, the vibration suppression effect is sustained even at a high temperature. Consequently, it is superior to conventional damper members that are made from rubbers and/or synthetic resin materials whose vibration suppression effect deteriorates due to change of their physical properties at high temperatures.

The present invention is adapted for any appropriate design change without being limited to the above-mentioned embodiments. For example, material and/or external diameter of the metal wire 64 forming the damper member 60, porosity of the damper member 60, etc. can be changed accordingly. Further, in the above-mentioned embodiments, the damper member 60 is formed in the shape of a ring; however, it may otherwise be made to have circular arc geometry or block geometry divided in circumferential direction.
The cross-sectional shape of the damper member 60 may be circular, or polygonal other than quadrangular. The rolling bearing 13 may be a roller bearing, not limited to a ball bearing. Further, an electric generator may be a DC generator, not limited to an AC electric generator (an alternator). Moreover, the present invention can be applied to other apparatus using a rolling bearing, not limited to an electric generator.

## Claims

1. A rolling bearing device comprising a rolling bearing, including:
- an inner ring and an outer ring that are disposed so as to be relatively rotatable; and
- a plurality of rolling elements disposed between the inner ring and the outer ring,
the rolling bearing device supporting, through the rolling bearing, a shaft rotatable relative to a housing,
- wherein the rolling bearing device comprises a damper member disposed between the rolling bearing and the housing, the damper member being formed of one or more metal wires that are knitted.

2. The rolling bearing device of claim 1,
wherein gaps are formed between the wires, the gaps being filled with a lubricant.

3. The rolling bearing device of claim 1,
wherein gaps are formed between the wires, and porosity as defined by the ratio of total volume occupied by the gaps to total volume of the damper member is set within a range of over 50 % and under 70 %.

4. An electric generator, comprising:
- a stator and a rotor;
- a housing to which the stator is fixed;
- a rotating shaft to which the rotor is fixed and rotational motion power is transmitted from external; and
- a rolling bearing attached to the housing and supporting the rotating shaft in such a manner that the shaft is freely rotatable;
- wherein the electric generator comprises a damper member disposed between the rolling bearing and the housing, the damper member being formed of one or more metal wires that are knitted.
